(19) Europäisches Patentamt
European Patent Office
Office européen des brevets

(11) **EP 2 956 351 B1**

(12) **EUROPÄISCHE PATENTSCHRIFT**

(45) Veröffentlichungstag und Bekanntmachung des Hinweises auf die Patenterteilung:
**05.04.2017   Patentblatt 2017/14**

(21) Anmeldenummer: **14703314.6**

(22) Anmeldetag: **31.01.2014**

(51) Int Cl.:
**B62D 25/00** *(2006.01)*       **B62D 25/02** *(2006.01)*
**B62D 25/10** *(2006.01)*       **B62D 29/00** *(2006.01)*

(86) Internationale Anmeldenummer:
**PCT/EP2014/051953**

(87) Internationale Veröffentlichungsnummer:
**WO 2014/124822 (21.08.2014 Gazette 2014/34)**

(54) **KAROSSERIEBAUTEIL UND VERFAHREN ZUR HERSTELLUNG EINES KAROSSERIEBAUTEILS**

COMPONENT AND METHOD FOR PRODUCING A COMPONENT

COMPOSANT ET PROCÉDÉ DE FABRICATION D'UN COMPOSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2013   DE 102013101378**

(43) Veröffentlichungstag der Anmeldung:
**23.12.2015   Patentblatt 2015/52**

(73) Patentinhaber: **ThyssenKrupp Steel Europe AG
47166 Duisburg (DE)**

(72) Erfinder:
• **FECHTE-HEINEN, Rainer
46238 Bottrop (DE)**
• **PATBERG, Lothar
47445 Moers (DE)**
• **KEVENHÖRSTER, Joseph Georg
44805 Bochum (DE)**
• **JENTSCH, Kai Uwe
47447 Moers (DE)**
• **FLASKAMP, Thomas
47051 Duisburg (DE)**
• **COTT, Andreas
99880 Waltershausen (DE)**
• **HILFRICH, Erik
40470 Düsseldorf (DE)**

(74) Vertreter: **ThyssenKrupp Intellectual Property GmbH
ThyssenKrupp Allee 1
45143 Essen (DE)**

(56) Entgegenhaltungen:
**EP-A2- 2 039 902       DE-A1-102009 052 716
FR-A1- 2 713 361       US-A1- 2005 158 573
US-A1- 2006 028 051    US-A1- 2006 202 492
US-B1- 7 582 349**

EP 2 956 351 B1

**Beschreibung**

Die Erfindung betrifft ein Karosseriebauteil mit einem Konstruktionselement und mit einem eine bestimmte Größe aufweisenden Öffnungsbereich. Ferner betrifft die Erfindung ein Verfahren zur Herstellung eines Karosseriebauteils.

Bauteile, insbesondere Karosseriebauteile oder Profilbauteile, welche beispielsweise in der Bautechnik eingesetzt werden, sind im Stand der Technik hinlänglich bekannt. Konstruktionselemente können aus unterschiedlichen Gründen an den Karosseriebauteilen vorgesehen sein, beispielsweise zur Modifikation der Geometrie oder zur Verstärkung der Karosseriebauteile. In den Karosseriebauteilen, wie beispielsweise Fahrzeugkarosseriebauteilen, werden allerdings aus diversen Gründen Öffnungsbereiche, beispielsweise in Form von Löchern, Lücken oder Durchbrüchen, benötigt.

Versteifungen innerhalb der Profilbauteile werden üblicherweise durch innere Stützelemente oder durch zumindest teilweise Verfüllung des Profils, auch mit schaumartigen Strukturen, erzielt.

Zum einen werden Karosseriebauteile häufig in Tauchbädern beschichtet. Beispielsweise werden die Karosseriebauteile einer kathodischen Tauchlackierung unterzogen, um die Karosseriebauteile vor Korrosion zu schützen. Diese Verfahren bieten sich insbesondere bei komplexeren Strukturen mit erschwerter Zugänglichkeit an, wie beispielsweise bei Hohlprofilen. Um einen Durchlauf für den Tauchlack zu ermöglichen, ist meist das Vorsehen von Löchern in dem Karosseriebauteil notwendig. Dies trifft auch für Profilbauteile in der Bautechnik zu.

Zum anderen werden Öffnungsbereiche vorgesehen, da es notwendig sein kann, dass Aufnahmelöcher oder Positionierungslöcher bereitgestellt werden müssen oder ein Zugang zu ansonsten unzugänglichen Bereichen, beispielsweise für (Füge-)Werkzeuge, erforderlich ist.

Problematisch hierbei ist allerdings, dass viele dieser Öffnungsbereiche im Karosseriebauteil oder Profilbauteil lediglich während der Produktion benötigt werden und grundsätzlich für das fertige Karosseriebauteil bzw. das daraus herzustellende Produkt unerwünscht sind oder nach der Fertigstellung keiner weiteren Funktion dienen. Dies kann beispielsweise aus akustischen Gründen der Fall sein, da durch vorhandene Öffnungsbereiche unerwünschte Geräusche, beispielsweise Fahrgeräusche oder Schwingungen, übertragen werden. Auch können die Öffnungsbereiche zu einer verstärkten Korrosion, beispielsweise durch ein ungehindertes Ausbreiten von Wasser, führen. Schließlich sind besagte Öffnungsbereiche auch aus optischen Gründen unerwünscht, falls der Bereich mit dem Öffnungsbereich beim fertigen Produkt eingesehen werden kann.

Daher werden diese Öffnungsbereiche, sofern diese nicht mehr benötigt werden, teilweise mit erheblichem Aufwand während der Produktion wieder verschlossen, versiegelt, minimiert oder zumindest weitestgehend unkenntlich gemacht.

Hierzu ist es bekannt, zum Beispiel sogenannte schaumbasierte "Pillar-Filler" einzusetzen. Mit diesen können unerwünschte Öffnungsbereiche durch ein Schaummaterial geschlossen werden. Diese Vorgehensweise ist allerdings insofern nachteilig, dass hierzu in der Regel ein zusätzlicher Verfahrensschritt benötigt wird und zudem der Einsatz vergleichsweise kostenintensiv ist.

Grundsätzlich ist denkbar, stattdessen die Öffnungsbereiche im Bauteil zu belassen, dies würde allerdings die oben beschriebenen unerwünschten Folgen bzgl. Optik, Akustik oder Korrosion haben.

Weiterhin ist aus dem Stand der Technik der deutschen Offenlegungsschrift DE 10 2009 052 716 A1 bekannt, ein aktives Material in Fahrzeugkarosseriebauteilen einzusetzen. Die Materialien werden dabei dazu eingesetzt, um Eigenschaften der Fahrzeugkarosserie wie Steifigkeit, Knautschmodus oder Energieabsorptionsrate zu modifizieren oder um Einsätze mit Hohlprofilen zu verriegeln.

Aus der japanischen Schrift JP-A 59 073 325 ist der Einsatz einer Formgedächtnislegierung bekannt, wobei hier diese Materialeigenschaft ausgenutzt wird, um eine Federkraft auf einen Kofferraumdeckel zu erzeugen.

Ausgehend von diesem Stand der Technik liegt der Erfindung die Aufgabe zugrunde, ein Karosseriebauteil und ein Verfahren zur Herstellung eines Karosseriebauteils anzugeben, wobei das Karosseriebauteil auf einfache Weise und kostengünstig hergestellt werden kann und den Anforderungen insbesondere an Akustik, Optik bzw. Korrosion genügt.

Gemäß der ersten Lehre der vorliegenden Erfindung wird die aufgezeigte Aufgabe mit einem gattungsgemäßen Bauteil dadurch gelöst, dass das Konstruktionselement mittels eines geformten Bereichs den Öffnungsbereich in dem Bauteil bereitstellt und der geformte Bereich zumindest teilweise aus einem Werkstoff mit Formgedächtniseigenschaften besteht, welcher bei Aktivierung durch eine Formänderung zumindest eine Verringerung der Größe des Öffnungsbereichs gewährleistet.

Das Bauteil ist ein Karosseriebauteil.

Das Konstruktionselement ist vorzugsweise ein einteiliges Konstruktionselement, beispielsweise ein Einsatz oder ein Blech. Das Konstruktionselement kann beispielsweise auch mehrteilig ausgeführt sein.

Beispielsweise weist das Konstruktionselement eine erste Seite und eine zweite Seite auf. Beispielsweise stellt das Konstruktionselement einen Öffnungsbereich zwischen einem der ersten Seite zugewandten ersten Bereich und

einem der zweiten Seite zugewandeten zweiten Bereich bereit.

Das Konstruktionselement hat vorzugsweise mehr als einen geformten Bereich. Die weiteren Bereiche können ebenfalls zumindest teilweise aus einem Werkstoff mit Formgedächtniseigenschaften bestehen oder aus einem anderen Werkstoff.

Eine Verringerung der Größe des Öffnungsbereichs ist beispielsweise eine teilweise oder vollständige Schließung des Öffnungsbereichs. Der Öffnungsbereich kann ein einziger zusammenhängender Bereich sein oder beispielsweise aus mehreren Teilbereichen bestehen. In diesem Fall ist entscheidend, dass sich der Öffnungsbereich insgesamt zumindest verringert. Ebenfalls können mehrere Öffnungsbereiche vorgesehen sein.

Im Ergebnis kann mit dem erfindungsgemäßen Bauteil erreicht werden, dass während der Herstellung der Öffnungsbereich genutzt werden kann, beispielsweise als Durchlauf beim Tauchlackieren, als Aufnahmeöffnung oder als Zugang für (Füge-)Werkzeuge, ohne darauf verzichten zu müssen, dass der Öffnungsbereich kostengünstig zumindest teilweise beseitigt werden kann. Wird der Öffnungsbereich nicht mehr benötigt, kann der zumindest teilweise aus einem Werkstoff mit Formgedächtniseigenschaften bestehende, den Öffnungsbereich bereitstellende, geformte Bereich bei Aktivierung einer Formänderung unterzogen werden. Dadurch verringert sich die Größe des Öffnungsbereichs.

Beispielsweise wird der Bereich des Konstruktionselements durch Kaltumformung in den geformten Zustand gebracht. In dem geformten Zustand kann der Werkstoff mit Formgedächtniseigenschaften beispielsweise über eine Erwärmung aktiviert werden, sodass durch die Formgedächtniseigenschaft der Werkstoff versucht wieder seine Ausgangsposition vor der Kaltverformung einzunehmen. Durch die Aktivierung ergibt sich also die Formänderung des geformten Bereichs, sodass die Verringerung der Größe des Öffnungsbereichs ermöglicht wird.

Bevorzugt ist das Konstruktionselement aus einem Werkstoff mit Formgedächtniseigenschaften hergestellt. Somit ergibt sich eine vereinfachte Produktion, die sich besonders für die Serienherstellung eignet. Beispielsweise wird für die Herstellung des Konstruktionselements in der Einzelteilfertigung nur ein Werkstoff benötigt und es müssen keine unterschiedlichen Materialien eingesetzt werden.

Prinzipiell kommen für die Erfindung alle Werkstoffe mit Formgedächtniseigenschaften in Betracht, also beispielsweise auch Formgedächtnispolymere, elektroaktive Polymere, elektrorheologische Materialien, Formgedächtniskeramiken, oder Baroplastik.

Vorzugsweise ist aber als Werkstoff mit Formgedächtniseigenschaften zumindest teilweise eine Formgedächtnislegierung vorgesehen. Formgedächtnislegierungen können nämlich ausreichend hohe Kräfte bei der Formänderung bereitstellen und haben sehr ähnliche Eigenschaften zu den ansonsten üblichen eingesetzten Metalllegierungen in Karosseriebauteilen bzw. Profilbauteilen, sodass im Übrigen keine oder nur geringe Anpassungen notwendig sind.

Beispielsweise kommen als Formgedächtnislegierungen Nickel-Mangan, Nickel-Mangan-Gallium, Nickel-Mangan-Antimon, Nickel-Mangan-Indium-Cobalt, Nickel-Titan, Nickel-Titan-Kupfer-, Kupfer-, Nickel-Aluminium, Kupfer-Aluminium-Nickel-, Eisen-, Eisen-Mangan-, Eisen-Mangan-Silizium-, Eisen-Mangan-Silizium-Chrom-, Eisen-Mangan-Silizium-Chrom-Nickel-, Eisen-Mangan-Aluminium-Nickel-, Eisen-Palladium- oder Eisen-Palladium-Platin-basierte Formgedächtnislegierungen in Frage. Die genannten Eisensysteme, insbesondere Eisen-Mangan-Silizium, Eisen-Mangan-Silizium-Chrom oder Eisen-Mangan-Silizium-Chrom-Nickel sind besonders bevorzugt und können auch in der Serienproduktion eingesetzt werden, da diese relativ kostengünstig im Vergleich zu den anderen Legierungssystemen sind und auch kostengünstig herstellbar sind. Darüber hinaus bieten die Eisen-basierten Systeme die Möglichkeit, die Aktivierung der Formgedächtniseigenschaften durch eine effiziente induktive Erwärmung bzw. durch entsprechende Prozesswärme zu gewährleisten, so dass die Aktivierung auf besonders einfache Art und Weise gelingt. Ähnliches gilt für weitere eisenbasierte Legierungen.

Gemäß einer weiteren Ausführungsform des erfindungsgemäßen Verbindungsmittels enthält die Formgedächtnislegierung neben Eisen und unvermeidbaren Verunreinigungen die folgenden Legierungselemente in Gew.-%:

$$12 \ \% \ \leq \text{Mn} \ \leq \ 45 \ \%,$$

$$1 \ \% \quad \leq \text{Si} \ \leq \ 20 \ \%,$$

$$\text{Cr} \ \leq \ 20 \ \%,$$

$$\text{Ni} \ \leq \ 20\%,$$

$$Mo \leq 20\%,$$

$$Cu \leq 20\%,$$

$$Co \leq 20\%,$$

$$Al \leq 10\%,$$

$$Mg \leq 10\%,$$

$$V \leq 2\%,$$

$$Ti \leq 2\%,$$

$$Nb \leq 2\%,$$

$$W \leq 2\%,0$$

$$C \leq 1\%,$$

$$N \leq 1\%,$$

$$P \leq 0,3\%,$$

$$Zr \leq 0,3\%,$$

$$B \leq 0,01\%.$$

Beispielsweise ist der Mangan- und Silizium-Gehalt wie angegeben eingeschränkt. Optional kann zudem eins oder mehrere der Legierungselemente Vanadium, Niob, Titan oder Wolfram in oben angegebenen Bereichen vorgesehen sein. Weiterhin optional können die Legierungselemente Kohlenstoff und/oder Stickstoff wie angegeben hinzulegiert sein. Optional können weiterhin Chrom oder Nickel im genannten Bereich vorgesehen sein. Zur Beeinflussung thermomechanischer Eigenschaften können schließlich jeweils eins oder mehrere der Legierungselemente aus den Gruppen Molybdän, Kupfer oder Cobalt; Aluminium oder Magnesium; Phosphor oder Zirkonium; Bor vorgesehen sein. Auch können optional Legierungselemente aus der Gruppe der seltenen Erden vorgesehen sein.

Ein entsprechendes Legierungssystem kann auf die gewünschten spezifischen Bauteileigenschaften durch die Auswahl der unterschiedlichen Legierungskomponenten sehr gut abgestimmt werden. Beispielsweise erhöht sich die Festigkeit bei Zugabe von Kohlenstoff, Chrom, Molybdän, Titan, Niob oder Vanadium deutlich.

Die Zugabe von Mangan, Kohlenstoff, Chrom oder Nickel stabilisiert die Austenitphase, was zu einer Erhöhung der Aktivierungstemperatur genutzt werden kann, eine Kombination von mindestens je einem Element aus den Gruppen Vanadium, Titan, Niob, Wolfram einerseits und mindestens je einem Element aus den Gruppen Kohlenstoff, Stickstoff, Bor andererseits führt zur Bildung von Ausscheidungen im Gefüge und somit zur Vereinfachung oder zum Entfall der thermomechanischen Materialbehandlung.

Eine pseudoplastische bzw. eine pseudoelastische Formgedächtnislegierung kann gemäß einem weiteren Ausführungsbeispiel des erfindungsgemäßen Bauteils dadurch bereitgestellt werden, dass die Formgedächtnislegierung neben Eisen und unvermeidbaren Verunreinigungen die folgenden Legierungselemente in Gew.-% enthält:

$$25\ \% \le Mn \le 32\ \%,$$

$$3\ \% \le Si \le 8\ \%,$$

$$3\ \% \le Cr \le 6\ \%,$$

$$Ni \le 3\ \%,$$

$$C \le 0{,}07\ \%,\ bevorzugt\ 0{,}01\ \% \le C \le 0{,}07\ \%,$$

und/oder

$$N \le 0{,}07\ \%,\ bevorzugt\ 0{,}01\ \% \le N \le 0{,}07\ \%,$$

$$0{,}1\ \% \le Ti \le 1{,}5\ \%$$

oder

$$0{,}1\ \% \le Nb \le 1{,}5\ \%$$

oder

$$0{,}1\ \% \le W \le 1{,}5\ \%$$

oder

$$0{,}1\ \% \le V \le 1{,}5\ \%.$$

Gemäß einer weiteren bevorzugten Ausführungsform ist das Konstruktionselement zumindest teilweise flach und separat vom Bauteil ausgebildet. Dadurch kann das Konstruktionselement unabhängig vom Bauteil aus einer Formgedächtnislegierung hergestellt werden. Beispielsweise ist das Konstruktionselement in Form eines Blechs ausgebildet. Ein als Blech ausgebildetes Konstruktionselement kann beispielsweise als Verstärkungsblech eingesetzt werden. Das Verstärkungsblech ist beispielsweise ein Schottblech.

Gemäß einer weiteren Ausführungsform des erfindungsgemäßen Bauteils ist das Bauteil ein Profil, insbesondere ein Hohlprofil. Solche Hohlprofile werden beispielsweise als Schweller eingesetzt. Alternativ kann das Bauteil auch ein Innenblech, insbesondere das einer Motorhaube, sein.

Beispielsweise separieren Schottbleche zwei Bereiche beispielsweise eines Hohlprofils, sodass hier ein Öffnungsbereich bei der Produktion notwendig ist, später aber möglichst vermieden werden soll. Auch Verstärkungsbleche, wie die eines Motorhaubeninnenblechs, weisen Öffnungsbereiche in Form von Positionierungslöchern auf, welche zur Begrenzung von Korrosion durch eindringendes Wasser möglichst vermieden werden sollen.

Somit ist ein erfindungsgemäßes Bauteil insbesondere in Bezug auf diese Kombinationen von Bauteilen und Konstruktionselementen vorteilhaft.

Der geformte Bereich zum Bereitstellen des Öffnungsbereichs kann gemäß einer weiteren Ausführungsform des erfindungsgemäßen Bauteils durch ein Biegen und/oder durch ein Falten des Konstruktionselements gebildet sein. Durch die Aktivierung des Werkstoffs mit Formgedächtniseigenschaften wird der zuvor geformte Bereich zur Herstellung des Öffnungsbereichs mindestens teilweise wieder zurückgebogen oder -gefaltet, sodass eine effektive Verringerung der Größe des Öffnungsbereichs erreicht wird.

Beispielsweise ist der geformte Bereich ein Randbereich des Konstruktionselements. Beispielsweise ist der geformte Bereich ein teilweise ausgestanzter Bereich des Konstruktionselements. Der geformte Bereich ist zum Beispiel als Lasche ausgebildet. Der geformte Bereich wird insbesondere in den ersten und/oder zweiten Bereich, welche durch das Konstruktionselement abgetrennt werden, gebogen oder gefaltet.

Gemäß einer weiteren Ausführungsform wird der Öffnungsbereich innerhalb des Konstruktionselements oder durch den Rand des Konstruktionselements gebildet. Wird der Öffnungsbereich innerhalb des Konstruktionselements gebildet, kann beispielsweise eine Lasche aus dem beispielsweise als Blech gebildeten Konstruktionselement herausgebogen und/oder - gefaltet sein. Stellt der Rand des Konstruktionselements den Öffnungsbereich bereit, kann beispielsweise ein Randbereich des Konstruktionselements umgebogen und/oder -gefaltet sein oder ein Bereich innerhalb des Konstruktionselements gebogen und/oder gefaltet sein. Wird der Öffnungsbereich durch den Rand des Konstruktionselements gebildet, kann der Öffnungsbereich beispielsweise zwischen dem Konstruktionselement und dem Bauteil gebildet sein.

Weist das Konstruktionselement einen geformten Anbindungsbereich zum Bauteil, insbesondere einen geformten Flanschbereich, auf, kann auf einfache Weise eine Verbindung insbesondere eines separat ausgebildeten Konstruktionselements mit dem Bauteil erzielt werden.

Vorzugsweise weist der geformte Anbindungsbereich reduzierte oder keine Formänderung bei Aktivierung auf. Beispielsweise wird die Formänderung des geformten Anbindungsbereichs von außen unterdrückt. Dadurch wird erreicht, dass eine Formänderung nicht in diesen Bereichen auftritt und die Anbindung des Konstruktionselements an das Bauteil stört.

Alternativ oder zusätzlich kann das Konstruktionselement abgesehen vom Anbindungsbereich auch andere und/oder weitere Bereiche aufweisen, in denen es reduzierte oder keine Formänderung bei Aktivierung aufweist und/oder in denen die Formänderung des geformten Anbindungsbereichs von außen unterdrückt wird.

Beispielsweise kann die Formänderung von außen unterdrückt werden, indem die Bereiche, bei denen keine Formänderung gewünscht ist, im Bauteil eingespannt sind oder mit diesem gefügt sind. Beispielsweise sind die Bereiche, bei denen keine Formänderung gewünscht ist, mit dem Bauteil gefügt, insbesondere geschweißt.

Die Formänderung kann beispielsweise dadurch zumindest reduziert werden, indem das Konstruktionselement in den Bereich, bei denen keine Formänderung gewünscht ist, perforiert ist. Durch eine Perforation in einem geformten Bereich wird das Rückstellmoment oder die Rückstellkraft dort bei Aktivierung verringert.

Eine weitere Alternative, einen Bereich bereitzustellen, in dem das Konstruktionselement reduzierte oder keine Formänderung bei Aktivierung aufweist, ist die Durchführung einer Wärmebehandlung, welche den Formgedächtniseffekt in selektiven Bereichen "löscht". Beispielsweise werden zuerst die Bereiche geformt, bei denen keine Formänderung gewünscht ist. Die Wärmebehandlung führt dabei zu einem Rücksetzen des Formgedächtniseffekts. Anschließend werden die Bereiche geformt, welche eine Formänderung bei Aktivierung zeigen sollen.

Eine weitere Alternative, Bereiche bereitzustellen, in denen das Konstruktionselement reduzierte oder keine Formänderung bei Aktivierung aufweist, ist die Verwendung von zwei Umformphasen. Mittels einer Umformung im kalten Zustand werden Geometrien in das Konstruktionselement eingebracht, welche von Anfang an vorgesehen sein müssen und dauerhaft gleichbleiben sollen, während mit einem Umformen im warmen oder halbwarmen Zustand der Formgedächtniseffekt eingeprägt wird. Dabei liegt die Halbwarmtemperatur in einem Temperaturbereich oberhalb der Aktivierungstemperatur des Formgedächtniseffekts.

Es ist gemäß einer weiteren Ausführungsform des erfindungsgemäßen Bauteils vorteilhaft, wenn das Konstruktionselement bei Aktivierung ein Übermaß gegenüber dem Öffnungsbereich aufweist und/oder ein zusätzliches Dichtelement im Öffnungsbereich vorgesehen ist.

Dass das Konstruktionselement bei Aktivierung ein Übermaß gegenüber dem Öffnungsbereich aufweist, bedeutet, dass das Konstruktionselement eine derartige Geometrie aufweist, dass das Konstruktionselement durch die Formänderung bei Aktivierung eigentlich einen größeren als den tatsächlich vorhandenen Öffnungsbereich schließen könnte. Beispielsweise weist das als Blech ausgestaltete Konstruktionselement im Aktivierten Zustand eine größere Abmessung auf, als die Innenabmessung des Hohlprofils, in das es eingesetzt ist. Dadurch kann insbesondere einer unvollständigen Formänderung bei Aktivierung begegnet werden. Beispielsweise erfolgt die Erzeugung eines Übermaßes durch Streckziehen oder sonstige weitere Verformungen.

Auch können zusätzliche Dichtelemente im Öffnungsbereich vorgesehen sein, um einer unvollständigen Formänderung vorzubeugen. Beispielsweise ist eine Raupe aus einem Dichtmittel, beispielsweise aus einer Nahtversiegelung, im Öffnungsbereich, vorgesehen.

Alternativ oder zusätzlich kann auch die Geometrie des Bauteils genutzt werden, sodass bereits bei einer unvollständigen Formänderung bei Aktivierung der Öffnungsbereich vorzugsweise vollständig geschlossen ist.

Weiterhin alternativ oder zusätzlich kann der geformte Bereich, beispielsweise eine Lasche oder ein Randbereich des Konstruktionselements, über die geschlossene Position hinaus geformt werden (beispielsweise in den der zweiten Seite des Konstruktionselements zugewandten zweiten Bereich), also zunächst in die entgegengesetzte Richtung geformt werden. In dieser Position wird dann durch eine Wärmebehandlung der Formgedächtniseffekt eingeprägt bzw. zurückgesetzt. Sodann wird der Bereich in die geöffnete Position geformt (beispielsweise in den der ersten Seite des Konstruktionselements zugewandten ersten Bereich). Bei einer Aktivierung versucht der geformte Bereich sich durch die Formänderung über die gewünschte geschlossene Position hinaus zu bewegen. Hierdurch kann ebenfalls einer unvollständigen Formänderung bei Aktivierung vorgebeugt werden.

Gemäß einer Ausführungsform des erfindungsgemäßen Bauteils, ist der Öffnungsbereich durch die Formänderung bei Aktivierung zumindest teilweise, vorzugsweise im Wesentlichen vollständig, geschlossen. Die Größe des Öffnungsbereichs ist dann derart verringert, dass die verbleibende Größe des Öffnungsbereichs in Bezug auf die relevante Anforderung zu vernachlässigen ist.

Gemäß einer zweiten Lehre der vorliegenden Erfindung wird die aufgezeigte Aufgabe auch durch ein Verfahren zur Herstellung eines Karosseriebauteils, insbesondere eines erfindungsgemäßen Karosseriebauteils, gelöst, umfassend die Schritte:

- Formen zumindest eines Bereichs eines Konstruktionselements eines Bauteils, sodass das Konstruktionselement einen eine bestimmte Größe aufweisenden Öffnungsbereich in dem Bauteil bereitstellt, wobei der geformte Bereich zumindest teilweise aus einem Werkstoff mit Formgedächtniseigenschaften besteht,

- Aktivieren einer Formänderung, sodass die Größe des Öffnungsbereichs durch die Formgedächtniseigenschaften zumindest verringert wird.

Falls das Konstruktionselement separat vom Bauteil bzw. Profilbauteils ausgebildet ist, kann das Formen zumindest eines Bereichs beispielsweise vor oder auch nach dem Einbau in das Bauteil bzw. der Verbindung mit dem Bauteil erfolgen.

Durch das erfindungsgemäße Verfahren kann im Ergebnis erreicht werden, dass während des Herstellungsprozesses des Karosseriebauteils der Öffnungsbereich genutzt werden kann, und dass der Öffnungsbereich kostengünstig zumindest teilweise beseitigt werden kann. Vor dem Aktivieren werden also vorzugsweise weitere Produktionsschritte durchgeführt, beispielsweise Positionieren oder Tauchlackieren. Wird der Öffnungsbereich nicht mehr benötigt, kann aufgrund des geformten Bereichs zumindest teilweise bestehend aus einem Werkstoff mit Formgedächtniseigenschaften der geformte Bereich, welcher den Öffnungsbereich bereitstellt, bei Aktivierung einer Formänderung unterzogen werden. Dadurch verringert sich die Größe des Öffnungsbereichs.

Vorzugsweise wird das Aktivieren durch Erwärmen durchgeführt. Dies kann in einem separaten Schritt erfolgen, beispielsweise in einem speziell für diesen Zweck vorgesehenen Erwärmungsschritt. Vorteilhaft kann eine andere Wärmebehandlung, insbesondere eine Einbrennbehandlung im Lackierprozess, zum Erwärmen genutzt werden.

Die Aktivierung des geformten Bereichs des Konstruktionselements kann auch über eine induktive Erwärmung bzw. durch entsprechende Prozesswärme erreicht werden, sofern Eisen-basierte Formgedächtnislegierungen verwendet werden. Darüber hinaus ist die Aktivierung durch eine exothermechemische Reaktion möglich.

Weitere vorteilhafte Ausgestaltungen des erfindungsgemäßen Verfahrens können den Ausführungen zum erfindungsgemäßen Karosseriebauteil entnommen werden.

Weiterhin besteht die Möglichkeit bei Ausführungsformen des erfindungsgemäßen Bauteils und des erfindungsgemäßen Verfahrens den Zweiweg-Memoryeffekt von Formgedächtnislegierungen auszunutzen. Dieser Effekt kann ebenfalls durch die geeignete Kombination zweier Formgedächtnislegierung mit unterschiedlicher Aktivierungstemperatur erzielt werden. Dabei wird der geformte Bereich beispielsweise auf eine besonders niedrige Temperatur gebracht, so dass die Aktivierung bei niedrigen Temperaturen erfolgt oder aber der Aktivierungszustand rückgängig gemacht werden kann. In diesem Fall lässt sich eine noch flexiblere Einstellung der Größe des Öffnungsbereichs erreichen.

Im Weiteren soll die Erfindung anhand von Ausführungsbeispielen in Verbindung mit der Zeichnung näher erläutert werden. Die Zeichnung zeigt in

Fig. 1a        eine perspektivische Ansicht einer Karosserie mit Schottblechen;

Fig. 1b        eine vergrößerte perspektivische Ansicht eines Schottblechs aus Fig. 1a;

Fig. 2a,b       Querschnittsansichten eines ersten Ausführungsbeispiels eines erfindungsgemäßen Karosseriebauteils vor und nach der Aktivierung;

Fig. 3a,b     Querschnittsansichten eines zweiten Ausführungsbeispiels eines erfindungsgemäßen Karosseriebauteils vor und nach der Aktivierung;

Fig. 4a,b     Querschnittsansichten eines dritten Ausführungsbeispiels eines erfindungsgemäßen Karosseriebauteils vor und nach der Aktivierung;

Fig. 5a-c     Querschnittsansichten eines vierten, fünften und sechsten Ausführungsbeispiels eines erfindungsgemäßen Karosseriebauteils;

Fig. 6a         Aufsicht eines siebten Ausführungsbeispiels eines erfindungsgemäßen Karosseriebauteils;

Fig. 6b         eine Vergrößerung des geformten Bereichs des Konstruktionselements des Karosseriebauteils aus Fig. 6a;

Fig. 7a,b     eine Querschnittsansicht entlang Linie VII aus Fig. 6b vor und nach Aktivierung.

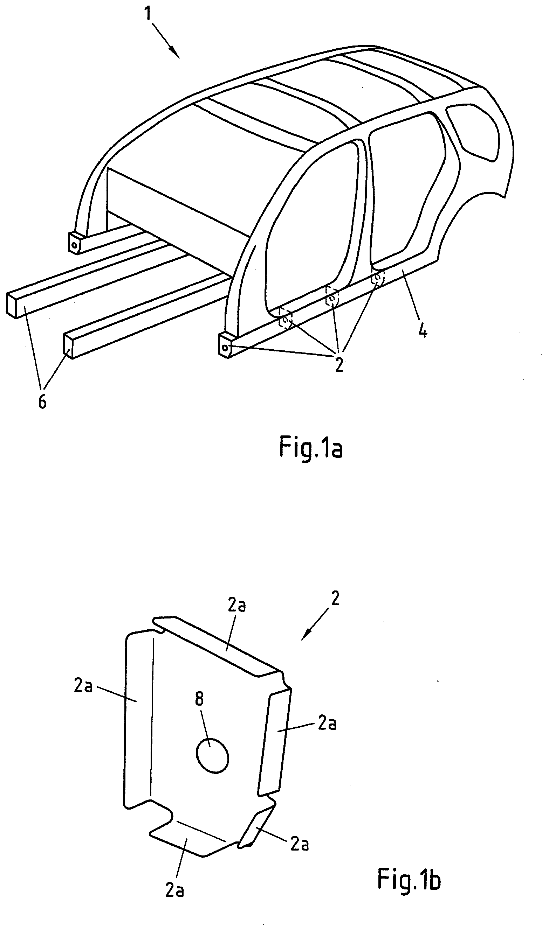

Fig. 1a zeigt eine perspektivische Ansicht einer Karosserie 1 mit als Verstärkung vorgesehenen Konstruktionselementen in Form von Schottblechen 2 gemäß dem Stand der Technik, welche in einem als Hohlprofil ausgestalteten Längsträger bzw. Schweller 4 angeordnet sind. Die Schottbleche 2 sind als separate Teile vom Längsträger 4 ausgestaltet und miteinander gefügt. Grundsätzlich ist möglich, die Schottbleche 2 auch in anderen Strukturen der Karosserie 1 vorzusehen, beispielsweise in den vorderen Längsträgern 6 oder auch in Querträgern oder Vertikalstreben.

Fig. 1b zeigt eine vergrößerte perspektivische Ansicht eines der Schottbleche 2 aus Fig. 1a. Das Schottblech 2 ist als im Wesentlichen flaches, mehreckiges Blech bzw. in beliebiger Form ausgebildet und weist an seinen Kanten jeweils im Wesentlichen rechtwinkelig umgebogene Bereiche zur Bildung von Flanschbereichen 2a aus, welche zur Anbindung des Schottblechs 2 an den Längsträger 4 dienen.

Das Schottblech 2 weist einen hier als rundes Loch beispielsweise durch Stanzen ausgebildeten Öffnungsbereich 8 auf. Der Öffnungsbereich 8 ist während der Produktion notwendig, um Durchläufe bei der Tauchlackierung, Positionierungslöcher, Aufnahmen und/oder Zugangsmöglichkeiten für Werkzeuge zur Verfügung stellen zu können. Nachteilig können diese Öffnungsbereiche 8 allerdings in Bezug auf akustische, optische oder strukturelle Eigenschaften sein.

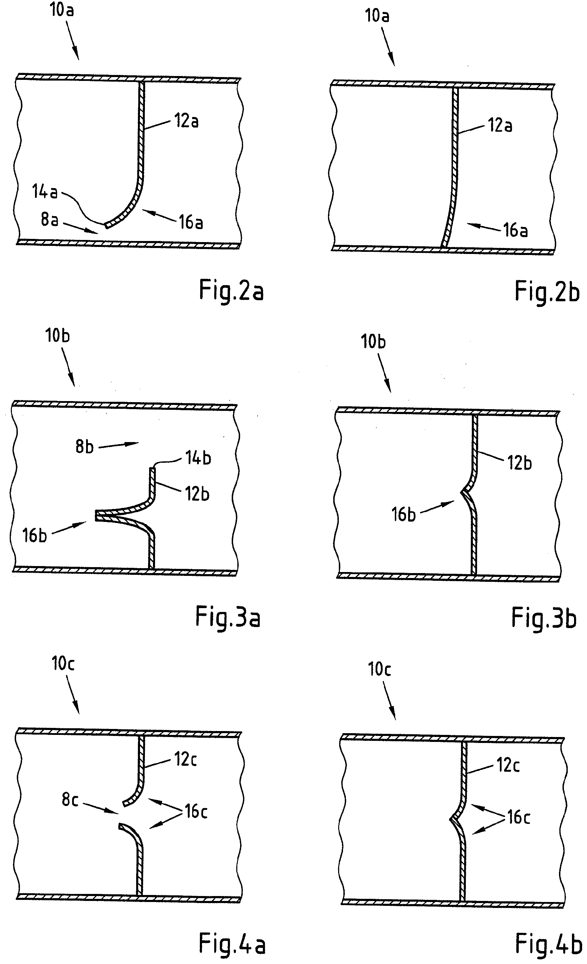

Fig. 2a und 2b zeigen nun Querschnittsansichten eines ersten Ausführungsbeispiels eines erfindungsgemäßen Karosseriebauteils 10a vor der Aktivierung (Fig. 2a) und nach der Aktivierung (Fig. 2b). Dieses im Folgenden weiterhin dargestellte Prinzip kann auch an einem Profilbauteil, das beispielsweise in der Bautechnik eingesetzt wird, eingesetzt werden.

Das Karosseriebauteil 10a ist hier als Hohlprofil ausgebildet und kann beispielsweise der Längsträger 4 oder auch eines der anderen Profile aus Fig. 1a sein. Das Karosseriebauteil weist ein in diesem Fall quer zum Hohlprofil 10a eingesetztes Konstruktionselement 12a auf, welches hier als Schottblech ausgebildet ist und beispielsweise ähnlich zu dem Schottblech 2 aus Fig. 1b ausgebildet sein kann. Zwischen dem Rand 14a des Schottblechs 12a und dem Hohlprofil 10a ist ein

Öffnungsbereich 8a ausgebildet. Der Öffnungsbereich 8a weist hier eine bestimmte Größe auf, welche für den entsprechenden Zweck ausreichend ist, sodass der Öffnungsbereich 8a beispielsweise als Durchlauf verwendet werden kann. Das Schottblech 12a stellt somit einen Öffnungsbereich 8a zwischen einem der ersten (linken) Seite des Schottblechs zugewandeten ersten Bereich und einem der zweiten (rechten) Seite des Schottblechs zugewandeten zweiten Bereich des Karosseriebauteils 10a bereit.

Im Unterschied zum Schottblech aus Fig. 1b ist der Öffnungsbereich beim Schottblech 12a nicht herausgestanzt, sondern mittels eines geformten Bereichs 16a gebildet, sodass der Öffnungsbereich 8a in dem Karosseriebauteil 10a bereitgestellt werden kann.

Das Formen des Bereichs 16a des Schottblechs 12a kann beispielsweise vor oder nach dem Einbau des Schottblechs 12a geschehen.

Weiterhin besteht der geformte Bereich 16a aus einem Werkstoff mit Formgedächtniseigenschaften. In diesem Fall ist beispielsweise das Schottblech 12a aus einem solchen Werkstoff hergestellt. In diesem Beispiel ist der Werkstoff eine Formgedächtnislegierung. Dies ist beispielsweise eine Legierung vom Typ Fe-Mn oder vom Typ Fe-Mn-Si oder vom Typ Fe-Mn-Si-Cr oder vom Typ Fe-Mn-Si-Cr-Ni. In diesem Fall wurde eine Formgedächtnislegierung gewählt, welche die folgende Zusammensetzung neben Eisen und unvermeidbaren Verunreinigungen in Gew.-% enthält:

$$25 \% \leq Mn \leq 32 \%,$$

$$3 \% \leq Si \leq 8 \%,$$

$$3 \% \leq Cr \leq 6 \%,$$

$$Ni \leq 4 \%,$$

$$C \leq 0,07 \%, \text{ bevorzugt } 0,01 \% \leq C \leq 0,07 \%,$$

und/oder

$$N \leq 0,07 \%, \text{ bevorzugt } 0,01 \% \leq N \leq 0,07 \%,$$

$$0,1 \% \leq Ti \leq 1,5 \%$$

oder

$$0,1 \% \leq Nb \leq 1,5 \%$$

oder

$$0,1 \% \leq W \leq 1,5 \%$$

oder

$$0,1 \% \leq V \leq 1,5 \%.$$

Die Formgedächtnislegierung bewirkt bei dem durch Kaltumformung hergestellten geformten Bereich 16a, dass sich dieser bei Aktivierung durch Erwärmen wiederum in die ursprüngliche, flache Form zurückformt.

Das Ergebnis dieser Formänderung nach Aktivierung ist in Fig. 2b dargestellt. Das Schottblech 12a ist nahezu wieder in seinen ursprünglichen flachen Zustand zurückgekehrt. Dadurch hat sich eine Verringerung der Größe des Öffnungsbereichs 8a eingestellt. In diesem Fall ist der ursprüngliche Öffnungsbereich 8a durch die Formänderung bei Aktivierung vollständig geschlossen.

Das Aktivieren geschieht in diesem Fall durch Erwärmen, beispielsweise in einem speziell für diesen Zweck vorgesehenen Erwärmungsschritt. Vorteilhaft kann aber auch eine Einbrennbehandlung im Lackierprozess zum Erwärmen genutzt werden. Die Aktivierung des geformten Bereichs 16a des Schottblechs 12a kann als weiteres Beispiel auch über eine induktive Erwärmung erfolgen.

Fig. 3a und 3b zeigen Querschnittsansichten eines zweiten Ausführungsbeispiels eines erfindungsgemäßen Karosseriebauteils vor und nach der Aktivierung. Dieses Karosseriebauteil 10b ist dem Karosseriebauteil 10a aus Fig. 2 ähnlich, sodass nur auf die Unterschiede eingegangen wird. Es unterscheidet sich dadurch, dass der geformte Bereich 16b des Konstruktionselements 12b in Fig. 3 mehrfach gebogen bzw. gefaltet ist. Durch eine Aktivierung der Formgedächtnislegierung wird auch hier erreicht, dass sich die in Fig. 3a dargestellte Größe des Öffnungsbereichs 8b, welcher sich hier ebenfalls zwischen dem Rand 14b des Konstruktionselements 12b und dem Hohlprofil 10b bildet, durch eine Formänderung des geformten Bereichs 16b verringert, bis der Öffnungsbereich 8b schließlich im Wesentlichen geschlossen ist, wie in Fig. 3b dargestellt.

Fig. 4a und 4b zeigen Querschnittsansichten eines dritten Ausführungsbeispiels eines erfindungsgemäßen Karosseriebauteils 10c vor und nach der Aktivierung. Auch das Karosseriebauteil 10c ist den Karossereiteilen 10a und 10b ähnlich, sodass nur auf die Unterschiede eingegangen wird. Das Karosseriebauteil 10c weist ein Konstruktionselement in Form eines Schottblechs 12c auf, wobei der Öffnungsbereich 8c durch den geformten Bereich 16c in diesem Ausführungsbeispiel innerhalb des Konstruktionselements 12c gebildet ist. Der Zustand des Karosseriebauteils nach der Aktivierung ist wiederum in Fig. 4b gezeigt. Der Öffnungsbereich 8c ist im Wesentlichen vollständig geschlossen, sodass vorteilhafte Eigenschaften in Bezug auf Akustik, Optik und/oder Korrosion erreicht werden können.

Die in den Fig. 2, 3 und 4 dargestellten Konstruktionselemente 12a, 12b, 12c können grundsätzlich ähnlich zu dem in Fig. 1b gezeigten gestaltet werden. Insbesondere können auch die Konstruktionselemente 12a, 12b, 12c weitere, nicht dargestellte Geometrien aufweisen, beispielsweise geformte (Anbindungs-)bereiche, wie etwa die geformten Flanschbereiche 2a.

Hierbei können die weiteren geformten Bereiche im Gegensatz zu den geformten Bereichen 16a, 16b, 16c eine reduzierte oder keine Formänderung bei Aktivierung zeigen. Beispielsweise wird die Formänderung des geformten Bereichs, in dem keine Formänderung gewünscht ist, von außen unterdrückt. Beispielsweise kann der geformte Bereich, bei dem keine Formänderung gewünscht ist, im Karosseriebauteil eingespannt sein oder mit dem Karosseriebauteil 10a, 10b, 10c gefügt sein. Andere Alternativen sind ebenfalls möglich, wie beispielsweise eine Perforation des geformten Bereichs oder eine Vorgehensweise, bei der der geformte Bereich, bei dem keine Formänderung gewünscht ist, als Ausgangszustand eingeprägt bzw. "gelöscht" wird, sodass in diesem Bereich von vorne herein keine Formänderung bei Aktivierung auftritt.

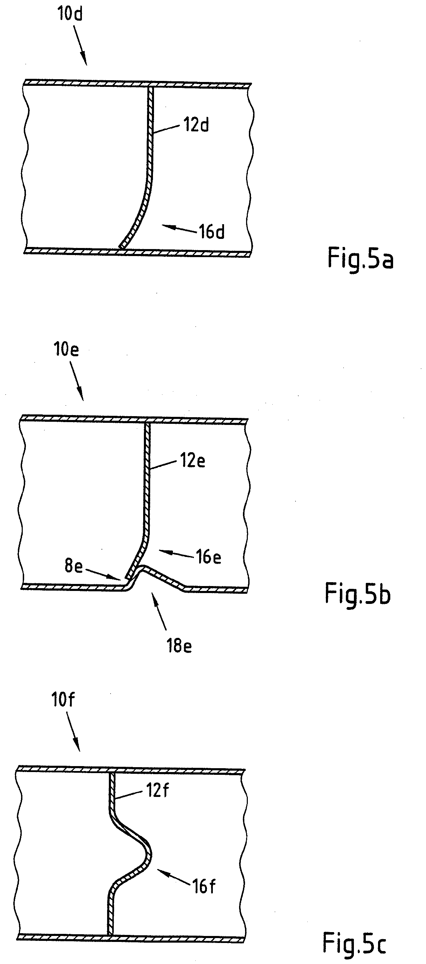

Fig. 5a, 5b, 5c zeigen Querschnittsansichten eines vierten, fünften und sechsten Ausführungsbeispiels eines erfindungsgemäßen Karosseriebauteils.

Das in Fig. 5a dargestellte Karosseriebauteil 10d ist ähnlich zu dem in Fig. 2 dargestellten. Das Konstruktionselement in Form eines Schottblechs 12d ist im bereits aktivierten Zustand gezeigt, das heißt der Öffnungsbereich ist bereits im Wesentlichen geschlossen. Im Unterschied zu dem in Fig. 2b gezeigten Schottblech 12a, weist das Schottblech 12d ein Übermaß gegenüber dem eigentlich zu schließenden Öffnungsbereich auf. Wie zu erkennen ist, kann sich das Schottblech 12d nicht in dem Maße in seinen flachen Zustand zurückformen, wie in beispielsweise in Fig. 2b gezeigt. Dadurch kann einer unvollständigen Formänderung des geformten Bereichs 16d bei Aktivierung vorgebeugt werden, da der Öffnungsbereich geschlossen wird, auch ohne dass eine vollständige Formänderung in den ursprünglichen flachen Zustand erfolgen muss.

Das in Fig. 5b dargestellte Karosseriebauteil 10e ist ebenfalls ähnlich zu dem in Fig. 2 dargestellten. Das Konstruktionselement in Form eines Schottblechs 12e ist wiederum im bereits aktivierten Zustand gezeigt, das heißt der Öffnungsbereich ist bereits im Wesentlichen geschlossen. Im Unterschied zu dem in Fig. 2b gezeigten Karosseriebauteil 10a in Form eines Hohlprofils weist das Hohlprofil 10e im Öffnungsbereich 8e keine im Wesentlichen flache Innenwand auf, sondern eine strukturelle Modifikation 18e in Form einer in den Öffnungsbereich 8e gerichteten Erhöhung. Die Erhöhung bildet eine Art Anschlag für das Schottblech 12e, sodass bereits bei noch nicht vollständig abgeschlossener Formänderung bei Aktivierung der Öffnungsbereich 8e im Wesentlichen geschlossen ist. Es wird also die Geometrie des Karosseriebauteils 10e genutzt, um einem verbleibenden Öffnungsbereich 8e bei unzureichender Formänderung bei Aktivierung entgegenzuwirken.

Das in Fig. 5c dargestellte Karosseriebauteil 10f verwendet ähnlich zu dem in Fig. 5a dargestellten Konstruktionselement 12d ein Übermaß, um einer unvollständigen Formänderung bei Aktivierung vorzubeugen. Das Konstruktionselement in Form eines Schottblechs 12f ist wiederum im bereits Aktivierten Zustand gezeigt. Das Übermaß wird bei dem Schottblech 12f allerdings durch ein lokales Streckziehen im Bereich 16f erzeugt.

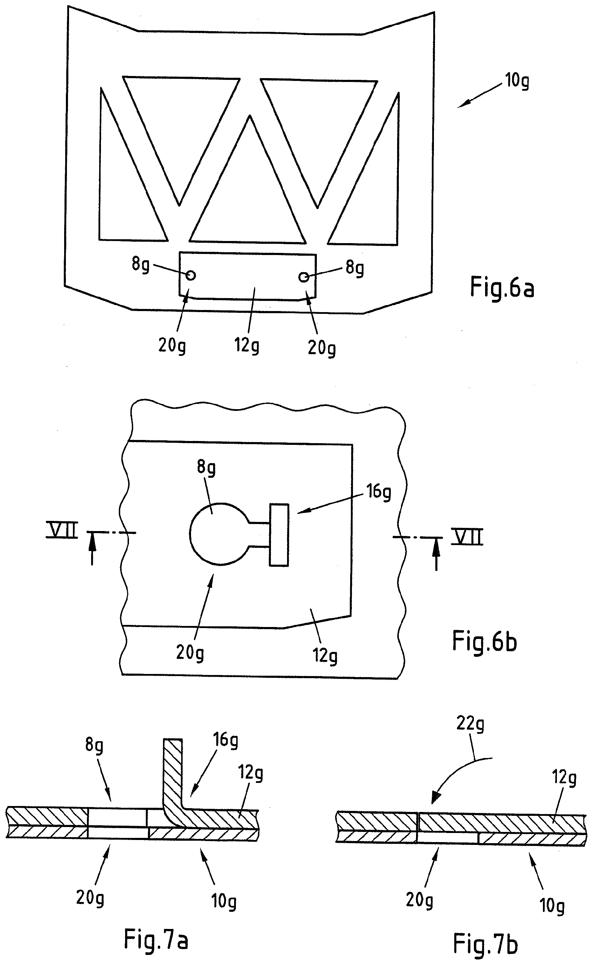

Fig. 6a zeigt eine Aufsicht eines siebten Ausführungsbeispiels eines erfindungsgemäßen Karosseriebauteils 10g. Das Karosseriebauteil 10g ist in diesem Ausführungsbeispiel das Innenblech einer Motorhaube und weist ein Konstruktionselement 12g in Form eines im Wesentlichen flachen Verstärkungsblechs auf. Das Innenblech 10g und das Verstärkungsblech 12g weisen Positionierungslöcher 20g auf. Die Positionierungslöcher im Verstärkungsblech 12g werden durch einen Öffnungsbereich 8g bereitgestellt, welcher mittels eines geformten Bereichs 16g erzeugt ist.

Fig. 6b zeigt eine Vergrößerung des geformten Bereichs 16g des Konstruktionselements 12g des Karosseriebauteils 10g aus Fig. 6a. Der geformte Bereich 16g des Verstärkungsblechs 12g erzeugt hier einen Öffnungsbereich 8g innerhalb des Verstärkungsblechs 12g, indem eine Lasche aus dem Verstärkungsblech 12g getrennt wurde und aus der Blechebene herausgebogen wurde.

Querschnittsansichten entlang Linie VII aus Fig. 6b vor und nach der Aktivierung sind in Fig. 7a und 7b dargestellt. Im in Fig. 7a dargestellten Zustand kann der Öffnungsbereich 8g als Positionierungsloch 20g mit dem darunter befindlichen Positionierungsloch 20g im Innenblech 10g genutzt werden. Durch die Aktivierung wird durch eine Formänderung des geformten Bereichs 16g die Größe des Öffnungsbereichs 8g verringert und in diesem Ausführungsbeispiel der Öffnungsbereich 8g im Wesentlichen geschlossen. Dieser Vorgang ist durch den Pfeil 22g angedeutet. Dadurch kann beispielsweise die Gefahr verringert werden, dass Wasser eindringt, welches Korrosion fördert.

**Patentansprüche**

1.  Karosseriebauteil

    - mit einem Konstruktionselement (12a-g) und
    - mit einem eine bestimmte Größe aufweisenden Öffnungsbereich (8a-g)

    **dadurch gekennzeichnet, dass**

    - das Konstruktionselement (12a-g) mittels eines geformten Bereichs (16a-g) den Öffnungsbereich (8a-g) in dem Karosseriebauteil (10a-g) bereitstellt und
    - der geformte Bereich (16a-g) zumindest teilweise aus einem Werkstoff mit Formgedächtniseigenschaften besteht, welcher bei Aktivierung durch eine Formänderung den Öffnungsbereich (8a-g) zumindest teilweise schließt.

2.  Karosseriebauteil nach Anspruch 1,
    **dadurch gekennzeichnet, dass**
    das Konstruktionselement (12a-g) aus einem Werkstoff mit Formgedächtniseigenschaften hergestellt ist.

3.  Karosseriebauteil nach Anspruch 1 oder 2,
    **dadurch gekennzeichnet, dass**
    als Werkstoff mit Formgedächtniseigenschaften zumindest teilweise eine Formgedächtnislegierung, insbesondere eine Fe-Legierung, Fe-Mn-Legierung, Fe-Mn-Si-Legierung, eine Fe-Mn-Si-Cr-Legierung oder eine Fe-Mn-Si-Cr-Ni-Legierung, vorgesehen ist.

4.  Karosseriebauteil nach Anspruch 3,
    **dadurch gekennzeichnet, dass**
    die Formgedächtnislegierung neben Eisen und unvermeidbaren Verunreinigungen die folgenden Legierungselemente in Gew.-% enthält:

$$12\ \% \leq Mn \leq 45\ \%,$$

$$1\ \% \leq Si \leq 20\ \%,$$

$$Cr \leq 20\ \%,$$

$$Ni \leq 20\%,$$

$$Mo \leq 20\%,$$

$$Cu \leq 20\%,$$

$$Co \leq 20\%,$$

$$Al \leq 10\%,$$

$$Mg \leq 10\%,$$

$$V \leq 2\,\%,$$

$$Ti \leq 2\,\%,$$

$$Nb \leq 2\,\%,$$

$$W \leq 2\,\%,$$

$$C \leq 1\,\%,$$

$$N \leq 1\,\%,$$

$$P \leq 0,3\,\%,$$

$$Zr \leq 0,3\,\%,$$

$$B \leq 0,01\,\%.$$

5. Karosseriebauteil nach Anspruch 3 oder 4,
   **dadurch gekennzeichnet, dass**
   die Formgedächtnislegierung neben Eisen und unvermeidbaren Verunreinigungen die folgenden Legierungselemente in Gew.-% enthält:

$$25\,\% \leq Mn \leq 32\,\%,$$

$$3\,\% \leq Si \leq 8\,\%,$$

$$3\,\% \leq Cr \leq 6\,\%,$$

$$Ni \leq 4\,\%,$$

$$C \leq 0,07\,\%,\ \text{bevorzugt}\ 0,01\,\% \leq C \leq 0,07\,\%,$$

und/oder

$$N \leq 0,07\,\%,\ \text{bevorzugt}\ 0,01\,\% \leq N \leq 0,07\,\%,$$

$$0,1\,\% \leq Ti \leq 1,5\,\%$$

oder

$$0,1\ \% \leq Nb \leq 1,5\ \%$$

oder

$$0,1\ \% \leq W \leq 1,5\ \%$$

oder

$$0,1\ \% \leq V \leq 1,5\ \%.$$

6.  Karosseriebauteil nach einem der Ansprüche 1 bis 5,
    **dadurch gekennzeichnet, dass**
    das Konstruktionselement (12a-g) zumindest teilweise flach und separat vom Bauteil (10a-g) ausgebildet ist, insbesondere in Form eines Blechs, insbesondere eines Verstärkungsblechs.

7.  Karosseriebauteil nach einem der Ansprüche 1 bis 6,
    **dadurch gekennzeichnet, dass**
    das das Bauteil (10a-g) ein Profil, insbesondere ein Hohlprofil, oder ein Innenblech, insbesondere einer Motorhaube ist.

8.  Karosseriebauteil nach einem der Ansprüche 1 bis 7,
    **dadurch gekennzeichnet, dass**
    der geformte Bereich (16a-g) zum Bereitstellen des Öffnungsbereichs (8a-g) durch ein Biegen und/oder durch ein Falten des Konstruktionselements (12a-g) gebildet ist.

9.  Karosseriebauteil nach einem der Ansprüche 1 bis 8,
    **dadurch gekennzeichnet, dass**
    der Öffnungsbereich (8a-g) innerhalb des Konstruktionselements (12a-g) oder durch den Rand (14a-c) des Konstruktionselements (12a-g) gebildet wird

10. Karosseriebauteil nach einem der Ansprüche 1 bis 9,
    **dadurch gekennzeichnet, dass**
    das Konstruktionselement (12a-g) einen geformten Anbindungsbereich (2a) zum Bauteil, insbesondere einen geformten Flanschbereich, aufweist.

11. Karosseriebauteil nach Anspruch 10,
    **dadurch gekennzeichnet, dass**
    das der geformte Anbindungsbereich (2a) eine reduzierte oder keine Formänderung bei Aktivierung aufweist.

12. Karosseriebauteil nach einem der Ansprüche 1 bis 11,
    **dadurch gekennzeichnet, dass**
    das Konstruktionselement (12a-g) bei Aktivierung ein Übermaß gegenüber dem Öffnungsbereich (8a-g) aufweist und/oder ein zusätzliches Dichtelement im Öffnungsbereich vorgesehen ist.

13. Verfahren zur Herstellung eines Karosseriebauteils, insbesondere eines Karosseriebauteils nach einem der Ansprüche 1 bis 12, umfassend die Schritte:

    - Formen zumindest eines Bereichs eines Konstruktionselements eines Karosseriebauteils, sodass das Konstruktionselement einen eine bestimmte Größe aufweisenden Öffnungsbereich in dem Karosseriebauteil bereitstellt, wobei der geformte Bereich zumindest teilweise aus einem Werkstoff mit Formgedächtniseigenschaften besteht,
    - Aktivieren einer Formänderung, sodass der Öffnungsbereich durch die Formgedächtniseigenschaften zumindest teilweise geschlossen wird, wobei eine Wärmebehandlung, insbesondere eine Einbrennbehandlung im Lackierprozess, zum Erwärmen genutzt wird.

**Claims**

1. Bodywork component

   - with a construction element (12a-g) and
   - with an opening region (8a-g) having a certain size,

   **characterized in that**

   - the construction element (12a-g) provides, by means of a shaped region (16a-g), the opening region (8a-g) in the bodywork component (10a-g), and
   - the shaped region (16a-g) consists at least in part of a material having shape-memory properties which, when activated, at least partially closes the opening region (8a-g) by changing shape.

2. Bodywork component according to Claim 1,
   **characterized in that**
   the construction element (12a-g) is made of a material having shape of memory properties.

3. Bodywork component according to Claim 1 or 2,
   **characterized in that**
   the material having shape-memory properties is at least in part a shape-memory alloy, in particular an Fe alloy, an Fe-Mn alloy, an Fe-Mn-Si alloy, an Fe-Mn-Si-Cr alloy or an Fe-Mn-Si-Cr-Ni alloy.

4. Bodywork component according to Claim 3,
   **characterized in that**
   the shape-memory alloy contains, in addition to iron and unavoidable contaminants, the following alloying elements in wt%:

$$12\% \leq Mn \leq 45\%,$$

$$1\% \leq Si \leq 20\%,$$

$$Cr \leq 20\%,$$

$$Ni \leq 20\%,$$

$$Mo \leq 20\%,$$

$$Cu \leq 20\%,$$

$$Co \leq 20\%,$$

$$Al \leq 10\%,$$

$$Mg \leq 10\%,$$

$$V \leq 2\%,$$

$$Ti \leq 2\%,$$

$$Nb \leq 2\%,$$

$$W \leq 2\%,$$

$$C \leq 1\%,$$

$$N \leq 1\%,$$

$$P \leq 0.3\%,$$

$$Zr \leq 0.3\%,$$

$$B \leq 0.01\%.$$

5. Bodywork component according to Claim 3 or 4,
   **characterized in that**
   the shape-memory alloy contains, in addition to iron and unavoidable contaminants, the following alloying elements in wt%:

$$25\% \leq Mn \leq 32\%,$$

$$3\% \leq Si \leq 8\%,$$

$$3\% \leq Cr \leq 6\%,$$

$$Ni \leq 4\%,$$

$$C \leq 0.07\%, \text{ preferably } 0.01\% \leq C \leq 0.07\%,$$

and/or

$$N \leq 0.07\%, \text{ preferably } 0.01\% \leq N \leq 0.07\%,$$

$$0.1\% \leq Ti \leq 1.5\%$$

or

$$0.1\% \leq Nb \leq 1.5\%$$

or

$$0.1\% \leq W \leq 1.5\%$$

or

$$0.1\% \leq V \leq 1.5\%.$$

6.  Bodywork component according to one of Claims 1 to 5,
    **characterized in that**
    the construction element (12a-g) is designed at least partially flat and separate from the component (10a-g), in particular in the form of a plate, in particular of a reinforcing plate.

7.  Bodywork component according to one of Claims 1 to 6,
    **characterized in that**
    the component (10a-g) is a profile, in particular a hollow profile, or an internal plate, in particular of an engine bonnet.

8.  Bodywork component according to one of Claims 1 to 7,
    **characterized in that**
    the shaped region (16a-g) for providing the opening region (8a-g) is formed by bending and/or folding the construction element (12a-g).

9.  Bodywork component according to one of Claims 1 to 8,
    **characterized in that**
    the opening region (8a-g) is formed within the construction element (12a-g) or by the edge (14a-c) of the construction element (12a-g).

10. Bodywork component according to one of Claims 1 to 9,
    **characterized in that**
    the construction element (12a-g) has a shaped connection region (2a) for connecting to the component, in particular a shaped flange region.

11. Bodywork component according to Claim 10,
    **characterized in that**
    the shaped connection region (2a) changes shape to a lesser extent or not at all on activation.

12. Bodywork component according to one of Claims 1 to 11,
    **characterized in that**
    on activation, the construction element (12a-g) is oversized in comparison to the opening region (8a-g), and/or that an additional sealing element is provided in the opening region.

13. Method for producing a bodywork component, in particular a bodywork component according to one of Claims 1 to 12, comprising the steps of:

    - shaping at least one region of a construction element of a bodywork component such that the construction element provides an opening region having a certain size in the bodywork component, wherein the shaped region consists at least in part of a material having shape-memory properties,

- activating a shape change such that the opening region is at least partially closed by the shape-memory properties, wherein heat treatment, in particular burning treatment in the painting process, is used for heating.

**Revendications**

1. Composant de carrosserie

   - avec un élément de construction (12a-g) et
   - avec une région d'ouverture (8a-g) présentant une grandeur déterminée,

   **caractérisé en ce que**

   - l'élément de construction (12a-g) procure au moyen d'une zone formée (16a-g) la région d'ouverture (8a-g) dans l'élément de carrosserie (10a-g) et
   - la zone formée (16a-g) se compose au moins en partie d'un matériau avec des propriétés de mémoire de forme, qui lors de l'activation ferme au moins en partie la région d'ouverture (8a-g) par un changement de forme.

2. Composant de carrosserie selon la revendication 1, **caractérisé en ce que** l'élément de construction (12a-g) est fabriqué en un matériau avec des propriétés de mémoire de forme.

3. Composant de carrosserie selon la revendication 1 ou 2, **caractérisé en ce qu'**il est prévu comme matériau avec des propriétés de mémoire de forme au moins partiellement un alliage à mémoire de forme, en particulier un alliage de fer, un alliage Fe-Mn, un alliage Fe-Mn-Si, un alliage Fe-Mn-Si-Cr ou un alliage Fe-Mn-Si-Cr-Ni.

4. Composant de carrosserie selon la revendication 3, **caractérisé en ce que** l'alliage à mémoire de forme contient, en plus du fer et des impuretés inévitables, les éléments d'alliage suivants, en % en poids:

$$12 \% \leq Mn \leq 45 \%,$$

$$1 \% \leq Si \leq 20 \%,$$

$$Cr \leq 20 \%,$$

$$Ni \leq 20 \%,$$

$$Mo \leq 20 \%,$$

$$Cu \leq 20 \%,$$

$$Co \leq 20 \%,$$

$$Al \leq 10 \%,$$

$$Mg \leq 10 \%,$$

$$V \leq 2 \%,$$

$$Ti \leq 2\ \%,$$

$$Nb \leq 2\ \%,$$

$$W \leq 2\ \%,$$

$$C \leq 1\ \%,$$

$$N \leq 1\ \%,$$

$$P \leq 0,3\ \%,$$

$$Zr \leq 0,3\ \%,$$

$$B \leq 0,01\ \%.$$

**5.** Composant de carrosserie selon la revendication 3 ou 4, **caractérisé en ce que** l'alliage à mémoire de forme contient, en plus du fer et des impuretés inévitables, les éléments d'alliage suivants, en % en poids:

$$25\ \% \leq Mn \leq 32\ \%,$$

$$3\ \% \leq Si \leq 8\ \%,$$

$$3\ \% \leq Cr \leq 6\ \%,$$

$$Ni \leq 4\ \%,$$

$$C \leq 0,07\ \%,\ \text{de préférence}\ 0,01\ \% \leq C \leq 0,07\ \%,$$

et/ou

$$N \leq 0,07\ \%,\ \text{de préférence}\ 0,01\ \% \leq N \leq 0,07\ \%,$$

$$0,1\ \% \leq Ti \leq 1,5\ \%,$$

ou

$$0,1\ \% \leq Nb \leq 1,5\ \%,$$

ou

$$0,1 \% \leq W \leq 1,5 \%,$$

ou

$$0,1 \% \leq V \leq 1,5 \%.$$

6. Composant de carrosserie selon l'une quelconque des revendications 1 à 5, **caractérisé en ce que** l'élément de construction (12a-g) est de forme au moins partiellement plate et est réalisé séparément du composant (10a-g), en particulier sous la forme d'une tôle, en particulier d'une tôle de renforcement.

7. Composant de carrosserie selon l'une quelconque des revendications 1 à 6, **caractérisé en ce que** le composant (10a-g) est un profilé, en particulier un profilé creux, ou une tôle intérieure, en particulier d'un capot du moteur.

8. Composant de carrosserie selon l'une quelconque des revendications 1 à 7, **caractérisé en ce que** la zone formée (16a-g) destinée à procurer la région d'ouverture (8a-g) est formée par une flexion et/ou par un pliage de l'élément de construction (12a-g).

9. Composant de carrosserie selon l'une quelconque des revendications 1 à 8, **caractérisé en ce que** la région d'ouverture (8a-g) est formée à l'intérieur de l'élément de construction (12a-g) ou par le bord (14a-c) de l'élément de construction (12a-g).

10. Composant de carrosserie selon l'une quelconque des revendications 1 à 9, **caractérisé en ce que** l'élément de construction (12a-g) présente une zone de jonction formée (2a) vers le composant, en particulier une zone en forme d'aile.

11. Composant de carrosserie selon la revendication 10, **caractérisé en ce que** la zone de jonction formée (2a) présente un changement de forme réduit ou aucun changement de forme lors d'une activation.

12. Composant de carrosserie selon l'une quelconque des revendications 1 à 11, **caractérisé en ce que** l'élément de construction (12a-g) présente lors de l'activation une sur-dimension par rapport à la région d'ouverture (8a-g) et/ou il est prévu un élément d'étanchéité supplémentaire dans la région d'ouverture.

13. Procédé de fabrication d'un composant de carrosserie, en particulier d'un composant de carrosserie selon l'une quelconque des revendications 1 à 12, comprenant les étapes suivantes:

    - former au moins une région d'un élément de construction d'un composant de carrosserie, de telle manière que l'élément de construction procure dans le composant de carrosserie une région d'ouverture présentant une grandeur déterminée, dans lequel la région formée se compose au moins en partie d'un matériau avec des propriétés de mémoire de forme,
    - activer un changement de forme, de telle manière que la région d'ouverture soit au moins en partie fermée par les propriétés de mémoire de forme, dans lequel on utilise pour le chauffage un traitement thermique, en particulier un traitement de cuisson dans un processus de peinture.

Fig.1a

Fig.1b

Fig.2a

Fig.2b

Fig.3a

Fig.3b

Fig.4a

Fig.4b

10d

12d

16d

Fig.5a

10e

12e

16e

8e

18e

Fig.5b

10f

12f

16f

Fig.5c

10g

8g    8g

20g    12g    20g

Fig.6a

8g

16g

VII    VII

20g    12g

Fig.6b

8g    16g    12g

20g    10g

Fig.7a

22g    12g

20g    10g

Fig.7b

**IN DER BESCHREIBUNG AUFGEFÜHRTE DOKUMENTE**

**In der Beschreibung aufgeführte Patentdokumente**

- DE 102009052716 A1
- JP 59073325 A